# DEMANDE DE BREVET EUROPEEN

(11) **EP 2 447 575 A1**
(43) Date de publication de la demande: **02.05.2012**
(21) Numéro de dépôt: 11182865.3
(22) Date de dépôt: 27.09.2011
(51) Int. Cl.: F16H 57/04, F16H 57/02

(54) **Boîte de vitesses à couvercle formant plusieurs conduites de lubrification, et couvercle correspondant**

(30) Priorité: 28.10.2010 FR 1058922
(71) Demandeur: Peugeot Citroën Automobiles SA, 78140 Vélizy-Villacoublay (FR)
(72) Inventeur: Ploe, Pierre, 92800 Puteaux (FR)

(57) **Abrégé**

L'invention concerne une boîte de vitesses de véhicule, notamment automobile, comprenant un carter (1) sur lequel est fixé un couvercle (2), le couvercle comprenant une première conduite interne (3) de liquide de lubrification, pour lubrifier une zone déterminée de la boîte de vitesses, et comprenant une seconde conduite (4) de liquide de lubrification, formée entre le couvercle (2) et le carter (1), pour lubrifier une autre zone déterminée de la boîte de vitesses. L'invention concerne également un couvercle (2) adapté pour une telle boîte de vitesses.

## Description

La présente invention concerne une boîte de vitesses, par exemple pour un véhicule automobile. Plus précisément, la présente invention concerne une boîte de vitesses dont le couvercle comporte des conduites pour permettre le passage d'un liquide de lubrification.

Une boîte de vitesses doit, pour fonctionner correctement, être lubrifiée au niveau de certaines zones déterminées. Pour cela, elle comprend des conduites visant à guider le liquide de lubrification, généralement de l'huile, vers les zones devant être lubrifiées. Selon les cas, ce liquide de lubrification peut s'écouler dans les conduites par gravité ou sous l'action d'une pompe.

Pour simplifier la fabrication de la boîte de vitesses, certaines des conduites de lubrification sont situées à l'extérieur du carter de la boîte de vitesses. Comme le montre par exemple le document DE 103 57 447, une conduite peut ainsi être formée dans un couvercle fermant la boîte de vitesses. Ces conduites permettent de guider le liquide de lubrification aux zones souhaitées, et notamment dans des perçages axiaux prévus dans certains des arbres tournants, permettant de distribuer le liquide de lubrification directement au niveau des pignons portés par ces arbres.

Les dispositifs de lubrification connus permettent donc l'acheminement du liquide de lubrification dans les zones souhaitées. Ils ne permettent cependant pas, d'une façon suffisamment simple et peu coûteuse à mettre en oeuvre, de lubrifier de façon différenciée des zones de la boîte de vitesses proches les uns des autres qui nécessitent des paramètres de lubrification différents.

Il est en effet nécessaire que certaines zones de la boîte de vitesse, et notamment les perçages axiaux des arbres tournants, qui alimentent en liquide de lubrification les synchroniseurs et les pignons, reçoivent un flux de liquide de lubrification important. D'autres zones, notamment les roulements portant les arbres tournants, ne nécessitent qu'un flux de lubrifiant faible. De plus, ces roulements ne peuvent généralement pas être lubrifiés par les mêmes conduites que celles alimentant le perçage axial des arbres qu'ils portent, car ils agiraient alors comme des pompes aspirant la plus grande partie du flux de liquide de lubrification.

La présente invention a pour objectif de pallier ces inconvénients de l'art antérieur. En particulier, la présente invention a pour objectif de permettre l'acheminement de liquide de lubrification avec des caractéristiques différentes, par exemple de flux ou de pression, vers différentes zones de la boîte de vitesses.

Un objectif particulier de l'invention est de permettre l'acheminement de flux différents de liquide de lubrification dans le perçage axial d'un arbre tournant et dans le palier, ou roulement, portant cet arbre.

Un autre objectif de l'invention est de fournir un tel système de lubrification qui soit particulièrement simple et peu coûteux à mettre en oeuvre, et qui ne nécessite que peu de modifications de la boîte de vitesses par rapport à celles fabriquées actuellement.

Ces objectifs, ainsi que d'autres qui apparaîtront par la suite, sont atteints à l'aide d'une boîte de vitesses de véhicule, notamment automobile, comprenant un carter sur lequel est fixé un couvercle, le couvercle comprenant une première conduite interne de liquide de lubrification, pour lubrifier une zone déterminée de la boîte de vitesses, la boîte de vitesse comprenant une seconde conduite de liquide de lubrification, formée entre le couvercle et une surface du carter, pour lubrifier une autre zone déterminée de la boîte de vitesses.

Avantageusement, le couvercle comprend une paroi intermédiaire séparant la première conduite de la seconde conduite.

Avantageusement, la paroi intermédiaire comporte une portion formant manchon communiquant avec la première conduite, traversant de manière étanche la seconde conduite et pénétrant dans un orifice de la boîte de vitesses, pour lubrifier la zone déterminée de la boîte de vitesses au travers de cet orifice.

Avantageusement, ledit orifice constitue l'une des extrémités d'un perçage axial d'un arbre tournant de la boîte de vitesses.

Avantageusement, la seconde conduite formée entre le couvercle et le carter alimente en liquide de lubrification au moins un palier de support de l'arbre tournant. Ce palier de support est de préférence un roulement.

Avantageusement, la première conduite interne débouche dans le carter, à son extrémité opposée à la portion formant manchon, pour recevoir le liquide de lubrification.

L'invention concerne également un couvercle de boîte de vitesses, destiné à être fixé au carter d'une boîte de vitesses, comprenant une première conduite interne de liquide de lubrification, pour lubrifier une zone déterminée de la boîte de vitesses, dans lequel la face interne du couvercle est conformée pour constituer avec le carter une seconde conduite de liquide de lubrification, pour lubrifier une autre zone déterminée de la boîte de vitesses.

Avantageusement, ce couvercle comprend une paroi intermédiaire séparant la première conduite de la seconde conduite.

Avantageusement, la paroi intermédiaire comporte une portion formant manchon communiquant avec la première conduite, apte à traverser de manière étanche la seconde conduite et à pénétrer dans un orifice de la boîte de vitesses, pour lubrifier la zone déterminée de la boîte de vitesses au travers de cet orifice.

L'invention concerne également un véhicule automobile comprenant une boîte de vitesses telle que décrite ci-dessus.

L'invention sera mieux comprise, et d'autres buts, caractéristiques, détails et avantages de celle-ci apparaîtront plus clairement au cours de la description qui suit d'un mode de réalisation préféré, non limitatif de l'objet et de la portée de la présente demande de brevet, accompagnés de dessins dans lesquels :
- la figure 1 représente de façon schématique le carter d'une boîte de vitesses équipée d'un couvercle, selon un mode de réalisation de l'invention ;
- la figure 2 représente la boîte de vitesses de la figure 1, dont le couvercle est représenté coupé ;

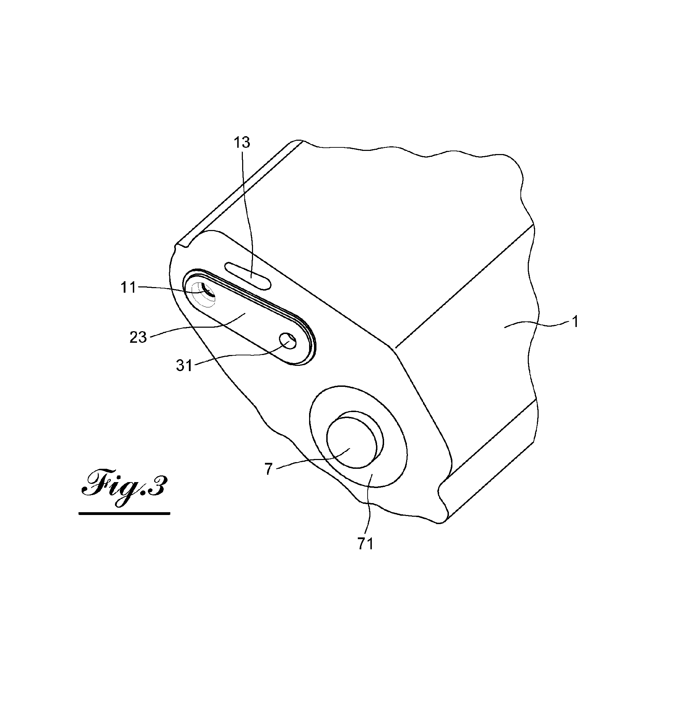

- la figure 3 représente la boîte de vitesses de la figure 1 dans laquelle le couvercle n'est pas représenté, à l'exception d'une paroi intermédiaire.

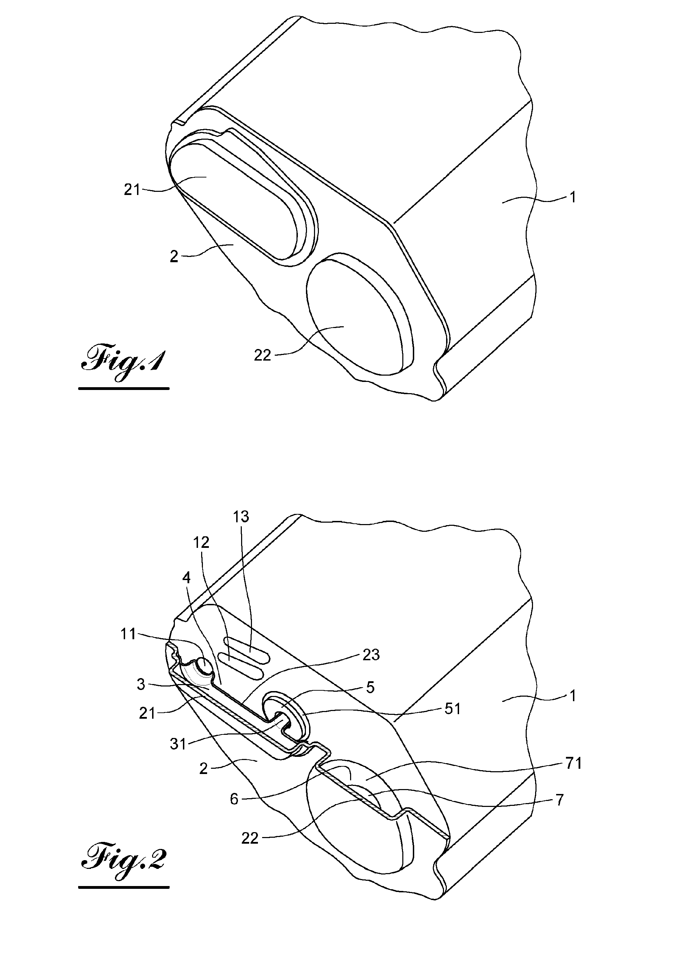

La figure 1 montre de façon schématique un carter 1 d'une boîte de vitesses de véhicule. L'une des faces de ce carter 1 est couverte par un couvercle de boîte de vitesses 2, qui est assemblé au carter 1 par des vis non représentées.

Le couvercle 2 est formé par une plaque de tôle sur laquelle apparaissent des déformations 21 et 22 formées par emboutissage, et faisant apparaître des formes creuses sur la face interne du couvercle 2.

Comme le montre la figure 2, la forme creuse générée par la déformation 22 fait apparaître un espace 6 entre le couvercle 2 et l'extrémité d'un arbre 7, lié au carter 1 par l'intermédiaire d'un roulement 71. Cet espace 6 permet de maintenir des jeux de fonctionnement, et peut permettre également, par exemple, l'acheminement de liquide de lubrification vers le roulement 71.

La forme creuse générée par la déformation 21 fait apparaître dans le couvercle 2 un espace 3, qui est partiellement fermé par une paroi intermédiaire 23 fixée par soudage à la tôle formant le corps du couvercle 2, entre l'espace 3 et le carter 1. Cette paroi intermédiaire 21 présente deux ouvertures, de telle sorte que l'espace 3 constitue une première conduite interne au couvercle 2.

A l'une des extrémités de cette première conduite interne, la paroi 23 est ainsi ouverte pour déboucher sur une portion de la surface du carter 1 dans laquelle apparaît une ouverture d'arrivée de liquide 11. Cette ouverture 11 est approvisionnée en liquide de lubrification par une goulotte interne au carter, récupérant le liquide de lubrification dans une grande partie de ce carter de façon à assurer un flux de liquide de lubrification important dans la première conduite vers l'orifice 31.

A proximité de l'autre extrémité de l'espace 3, une partie de la paroi intermédiaire 23 est conformée en manchon s'introduisant dans l'une des extrémités d'un perçage axial d'un arbre tournant 5 de la boîte de vitesses. Ce manchon forme une portion de conduite 31 permettant l'écoulement dans le perçage axial de l'arbre tournant 5 du liquide de lubrification circulant dans la première conduite formée par l'espace 3.

La première conduite formée par l'espace 3 permet donc l'acheminement du liquide de lubrification entre l'ouverture d'arrivée de liquide 11 et le perçage axial de l'arbre tournant 5.

La face interne du couvercle 2, constituée notamment par la paroi intermédiaire 23, présente une forme permettant l'apparition d'un espace 4 entre cette face interne et la surface du carter. Cet espace 4 est connecté à des ouvertures 12 et 13 du carter, qui forment des écopes récupérant une petite partie du liquide de lubrification projetée dans le carter, et alimentent l'espace 4 d'un flux faible de liquide de lubrification. Cet espace 4 est également en contact avec le roulement à billes 51 maintenant l'arbre 5 au carter. Ainsi, cet espace constitue une seconde conduite permettant l'acheminement du liquide de lubrification des ouvertures 12 et 13 vers le roulement 51.

Le couvercle 2 de boîte de vitesses selon l'invention permet donc très facilement d'alimenter en liquide de lubrification deux zones distinctes de la boîte de vitesses, une de ces zones, le roulement à bille 51, entourant complètement l'accès à une autre de ces zones, le perçage axial de l'arbre tournant 5. Ces deux conduites distinctes étant prévues dans le couvercle, elles n'entraînent pas de complexité supplémentaire pour la réalisation du carter de la boîte de vitesses.

Il est à noter que des joints d'étanchéité peuvent être prévus, notamment au niveau des points de contact entre le couvercle 2 et le carter 1, pour préserver l'étanchéité de l'espace 3 formant la première conduite et de l'espace 4 formant la seconde conduite.

## Revendications

1. Boîte de vitesses de véhicule, notamment automobile, comprenant un carter (1) sur lequel est fixé un couvercle (2), le couvercle comprenant une première conduite interne (3) de liquide de lubrification, pour lubrifier une zone déterminée de la boîte de vitesses,
**caractérisée en ce qu'**elle comprend une seconde conduite (4) de liquide de lubrification, formée entre le couvercle (2) et une surface du carter (1), pour lubrifier une autre zone déterminée de la boîte de vitesses, ladite seconde conduite étant agencée pour assurer un flux de liquide différent de celui de la première conduite ; cette différenciation de flux permettant d'alimenter deux zones déterminées distinctes de la boîte de vitesses dont les paramètres de lubrification sont différents.

2. Boîte de vitesses selon la revendication 1, **caractérisée en ce que** le couvercle (2) comprend une paroi intermédiaire (23) séparant la première conduite (3) de la seconde conduite (4).

3. Boîte de vitesses selon la revendication 2, **caractérisée en ce que** la paroi intermédiaire (23) comporte une portion formant manchon communiquant avec la première conduite (3), traversant de manière étanche la seconde conduite (4) et pénétrant dans un orifice de la boîte de vitesses, pour lubrifier la zone déterminée de la boîte de vitesses au travers de cet orifice.

4. Boîte de vitesses selon la revendication 3, **caractérisée en ce que** ledit orifice constitue l'une des extrémités d'un perçage axial d'un arbre tournant (5) de la boîte de vitesses.

5. Boîte de vitesses selon la revendication 4, **caractérisée en ce que** la seconde conduite (44) formée entre le couvercle (2) et le carter (1) alimente en liquide de lubrification au moins un palier de support de l'arbre tournant (5).

6. Boîte de vitesses selon l'une quelconque des revendications 3 à 5, **caractérisée en ce que** la première conduite interne (3) débouche dans le carter, à son extrémité opposée à la portion formant manchon, pour recevoir le liquide de lubrification.

7. Couvercle de boîte de vitesses, destiné à être fixé au carter (1) d'une boîte de vitesses, comprenant une première conduite interne (3) de liquide de lubrification, pour lubrifier une zone déterminée de la boîte de vitesses, **caractérisé en ce que** la face interne du couvercle est conformé pour constituer avec le carter (1) une seconde conduite (4) de liquide de lubrification, pour lubrifier une autre zone déterminée de la boîte de vitesses.

8. Couvercle de boîte de vitesses selon la revendication 7, **caractérisé en ce qu'**il comprend une paroi intermédiaire (23) séparant la première conduite (3) de la seconde conduite (4).

9. Couvercle de boîte de vitesses selon la revendication 8, **caractérisé en ce que** la paroi intermédiaire (23) comporte une portion formant manchon communiquant avec la première conduite (3), apte à traverser de manière étanche la seconde conduite (4) et à pénétrer dans un orifice de la boîte de vitesses, pour lubrifier la zone déterminée de la boîte de vitesses au travers de cet orifice.

10. Véhicule automobile **caractérisé en ce qu'**il comprend une boîte de vitesses selon l'une quelconque des revendications 1 à 6.
